# EUROPEAN PATENT APPLICATION

(11) **EP 4 763 585 A1**
(43) Date of publication of application: **24.06.2026**
(21) Application number: 25223973.6
(22) Date of filing: 16.12.2025
(51) Int. Cl.: B60L 15/20, B60Q 5/00, G10K 11/18, G10K 15/02

(54) **METHOD FOR GENERATING SOUNDS INDICATIVE OF THE OPERATION OF A MOTOR VEHICLE WITH ELECTRIC PROPULSION, AND MOTOR VEHICLE WITH SOUND EMISSION MEANS**

(30) Priority: 19.12.2024 IT 202400029160
(71) Applicant: FERRARI S.p.A., 41100 Modena (IT)
(72) Inventor: CIRILLO, Maddalena, 41100 Modena (IT); BALLATORE, Marco, 41100 Modena (IT); PALERMO, Antonio, 41100 Modena (IT); VEZZINI, Lorenzo, 41100 Modena (IT)
(74) Representative: Studio Torta S.p.A.

(57) **Abstract**

Method for generating sounds indicative of the operation of a motor vehicle (1) with electric propulsion comprising: determining a characteristic signal relative to the detection of one or more quantities indicative of an operation of a first electric motor (3) and of a second electric motor (4), the first and the second electric motor (3, 4) being configured to lead into rotation respective wheels (2a, 2b) aligned along an axis (A); generating a first sound signal, associated with the one or more quantities, having a first frequency content determined by a function of a further frequency content of the characteristic signal; verifying an operating condition of the first and of the second electric motor (3, 4) determined by a difference between a first motor revolution number (R1) of the first electric motor (3) and a second motor revolution number (R2) of the second electric motor (4) less than or equal to a threshold (TH); emitting sounds reproducing the first sound signal, when said operating condition is verified; or otherwise substituting the first sound signal with a second sound signal, and emitting further sounds reproducing the second sound signal. The second sound signal has a second frequency content determined on the basis of one between the first and the second motor revolution number (R1, R2). In addition, the second sound signal is generated employing a mapping (50) which associates to the said one between the first and the second motor revolution number (R1, R2) a further sound signal indicative of an operation of the first and/or of the second electric motor (3, 4) corresponding to said operating condition.

## Description

### Cross reference to related Applications

This patent application claims priority from Italian Patent Application no. 102024000029160 filed on December 19, 2024, the entire disclosure of which is incorporated herein by reference.

### Technical field

The present invention relates to a motor vehicle with sound generation assembly having a beating removal function and a method for generating sounds thereof.

### Background

As is well known, some motor vehicles are fitted with electric propulsion devices, i.e. devices which include at least one electric motor to drive the respective motor vehicle. During its operation, the electric motor emits very faint sounds mostly associated to vibration of the mechanical components, or to emissions of the electrical components, of the electric motor. This introduces a problem of awareness of the driver with respect to the operating conditions of the electric motor and more generally with respect to the performance of the motor vehicle comprising the electric motor. Therefore, a need is felt to emphasize more the performance of the motor vehicles or to increase the awareness of the driver with regard to such performance.

More specifically, there is a need to provide sound emission apparatuses that emit sounds associated to the trend of characteristic quantities of the operation of the electric motor, such as the motor revolutions of the electric motor.

However, in the case of motor vehicles employing two electric motors arranged so as to lead into rotation respective wheels aligned along an axis, a sound emission apparatus configured to emit sounds associated to both the motor revolutions of the two electric motors could emit sounds having slightly out-of-phase frequencies between them, thus generating interference phenomena (or also known as beatings). Such a condition could occur, for example, when there is a steering condition in the motor vehicle.

Here, a frequency of the sound emitted by a motor may be totally, or partially, phased or counter-phased with the same frequency of the sound emitted by the other motor, giving rise to constructive or destructive interference respectively.

Beatings can therefore lead to an excessive emphasis of some frequencies and/or the cancellation of others, generating as such a distortion of the overall sound emitted.

Therefore, there is also a need to avoid as much as possible the emission of sounds affected by beatings, without, however, renouncing the emission of sounds that are in any case indicative of the operation of the motor vehicle.

An aim of the invention is to fulfil at least the latter requirement, preferably in a simple, reliable, and repeatable manner.

### Summary

The aim is achieved by a method for generating sounds and by a motor vehicle as defined in the independent claims.

The dependent claims set forth particular embodiments of the invention.

### Brief description of the figures

In order to better understand the present invention, some preferred embodiments thereof will now be disclosed, for merely exemplary and non-limiting purposes, with reference to the enclosed drawings, wherein:
- Figure 1 is a schematic side view of a motor vehicle according to the invention;
- Figure 2 is a simplified block diagram of a portion of the motor vehicle in Figure 1;
- Figure 3 is a flow chart relative to the method for generating sounds according to the invention;
- Figure 4 shows an association table employed by the method in Figure 3; and
- Figure 5 is a simplified block diagram of a further portion of the motor vehicle in Figure 1.

### Description of embodiments

The following description refers to the arrangement shown in the drawings; consequently, expressions such as "above", "below", "higher", "lower", "top", "bottom", "right", "left" and the like relate to the attached figures and should not be interpreted as limiting.

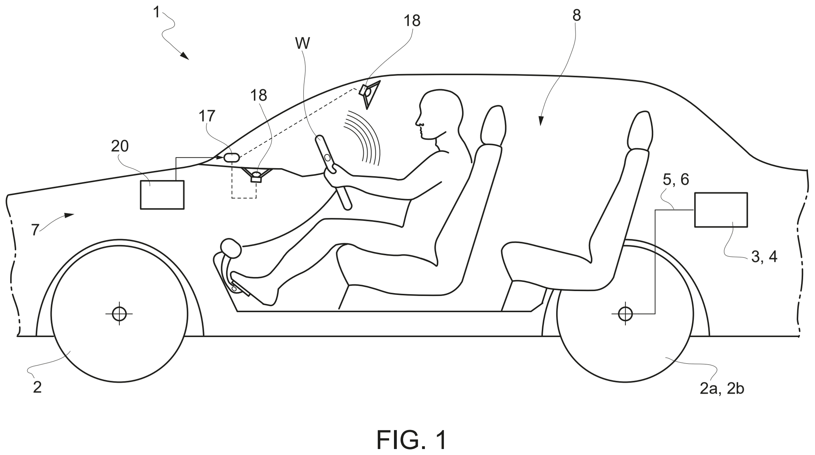

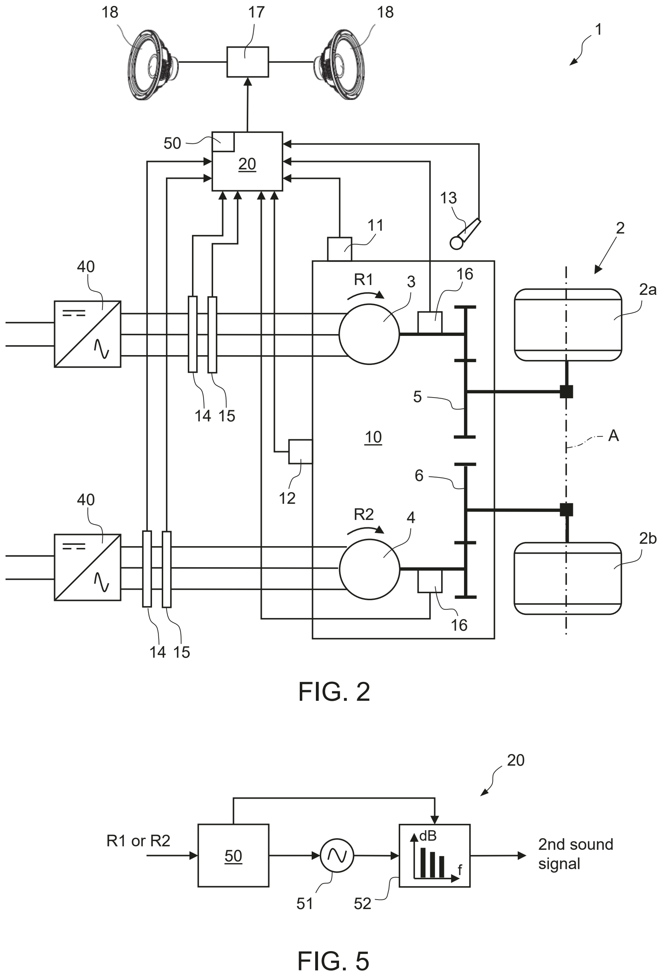

With reference to Figure 1 and Figure 2, a motor vehicle according to an embodiment of the present invention is referred to as a whole by reference number 1.

The motor vehicle 1 comprises a plurality of wheels 2, a first electric motor 3 and a second electric motor 4. The first and the second electric motor 3, 4 are arranged or configured to lead in rotation respective wheels 2a, 2b of the plurality of wheels 2 aligned along an axis A of the motor vehicle. In particular, the motor vehicle 1 comprises a first transmission group 5, configured to connect the first electric motor 3 to a first wheel 2a, and a second transmission group 6, configured to connect the second electric motor 4 to a second wheel 2b. The first and the second electric motor 3, 4 are therefore able to deliver power to the respective wheels 2a, 2b via the first and the second transmission group 5, 6 respectively.

More generally, the first and the second electric motor 3, 4 and the first and the second transmission group 5, 6 are part of an electric axle 10 of the motor vehicle 1. The axle 10 generally comprises a plurality of moving components, for example in addition to the first and the second electric motor 3, 4; in particular, the moving components move as a function of the operation of the first and/or of the second electric motor 3, 4 or more generally of the operation of the motor vehicle 1 on the road. The moving components may be part of the first and/or of the second transmission group 5, 6 or of the first and/or of the second electric motor 3, 4, i.e., they may comprise portions of the first and/or of the second transmission group 5, 6 and/or of the first and/or of the second electric motor 3, 4.

According to a possible non-limiting aspect, the motor vehicle 1 comprises a steering wheel W configured to steer at least two of the wheels 2, for example wheels 2a, 2b, e.g. in a manner known and not described in detail. As is normally the case in motor vehicles, the steering wheel W is rotatable about a steering wheel axis. Specifically, the steering wheel W is configured to rotate about the steering wheel axis by making a steering wheel angle (for example, a steering wheel rotation angle W) about the steering wheel axis, for example relative to a reference position where the steering wheel angle is (e.g., conventionally) equal to zero. For example, the steering wheel angle (specifically made by the steering wheel W with its rotation about the steering wheel axis) corresponds to a steering or more precisely to a steering angle of the motor vehicle 1 or of the wheels 2, for example the wheels 2a, 2b. In particular, the steering or steering angle is zero when the steering wheel angle is equal to zero.

Therefore, in any occurrence in the text, according to one or more non-limiting embodiments, the steering wheel angle is replaceable or interchangeable with the steering or steering angle, in particular of the motor vehicle 1 or of the wheels 2, for example the wheels 2a, 2b. In general, according to one or more non-limiting embodiments, the steering wheel angle is not necessarily the angle made by the steering wheel W, but could alternatively be defined by the steering or by the steering angle.

According to some preferred aspects of at least one or more examples of this description (preferred aspects which will be more specifically explained below), the motor vehicle 1 has one or more sensors or transducers that detect a vibrational and/or electromagnetic response of the axle 10, the sensors or transducers being arranged in suitable positions to sense in a maximised way the response during the operation of the motor vehicle 1.

The sensors or transducers generate signals corresponding to the detected response; the signals flow into a processor or control unit or processing unit, which may be part of a dedicated control unit or integrated in a sound system of the motor vehicle 1, for the purpose of processing a characteristic signal of the operation of the first and of the second electric motor 3, 4 or more generally of the axle 10, the characteristic signal having dynamics indicative of the state or mode by which the motor vehicle 1 is driven. For this purpose, the characteristic signal can be frequency-filtered through the processor via a pass-band filter.

The characteristic signal is then transferred to the sound system or received by the sound system, from which it can be further adapted in terms of filtering and levels, and emitted through the sound system loudspeakers in order to provide a feedback to the driver of the motor vehicle 1, on the status of the operation thereof.

According to an example, the first and the second electric motor 3, 4 are each configured to emit or generate respective variable, or more precisely rotating, magnetic fields during their operation.

During operation, the first and the second electric motors 3, 4 are each power supplied with a respective power supply current providing each of them with the electric energy to deliver a torque or power.

More specifically, the first and the second electric motor 3, 4 are motors power supplied each by a respective alternating current, more specifically the first and the second electric motor 3, 4 may be synchronous motors and/or permanent magnet motors. In other words, the power supply current for the first and the second electric motor 3, 4 is an alternating current. These latter aspects are not essential, since the first and the second electric motors 3, 4 can also be asynchronous motors and/or induction motors, or more generally any type of motor emitting a rotating or variable magnetic field during its operation. Even more generally, the first and the second electric motors 3, 4 can even be at least motors adapted to induce magnetic field variations on a transduction device due to the movement or more precisely to the rotation of their respective components during operation.

The first and the second electric motor 3, 4 can be part of an electric motor assembly, in turn being part of the motor vehicle 1. In addition, the motor vehicle 1 comprises a body 7 suspended with respect to the wheels 2 by means of suspensions of the known type and not shown. The body 7 defines a passenger compartment 8 of the motor vehicle 1 to accommodate at least one driver and possibly one or more passengers or more generally at least one user.

In addition, the motor vehicle 1 comprises a transduction assembly comprising a plurality of transducers 11, 12, 13, 14, 15 configured to detect respective quantities indicative of an operation, or a movement or vibration of the first and of the second electric motor 3, 4 or more generally of the axle 10, with particular reference to its moving components, i.e. indicative of an operation, or a movement or vibration of one or more of the moving components. In other words, the quantities may be indicative of an operation, or of a movement or vibration of a moving component of the axle 10.

As an alternative, the transduction assembly may possibly comprise only one or any combination of transducers 11, 12, 13, 14, 15.

In other words, the electric motor assembly comprises a transduction device which includes at least a sensor device or a transducer and an emission device, as will become clearer hereinafter.

In general, it is clear that the motor vehicle 1 may comprise further motors not shown, in particular electric motors, for example to deliver power to the wheels 2 of the front of the motor vehicle 1, while the first and the second electric motors 3, 4 deliver power to the wheels 2 of the rear of the motor vehicle 1. In other words, the invention is not limited to a single pair of electric motors associated to a specific pair of wheels, without losing generality. Correspondingly, the transducer assembly or device may comprise further transducers to detect quantities associated to the operation of the further electric motors or of the relative axles.

For the sake of clarity, transduction assembly and transduction device can be considered as synonymous. In general, the terms assembly and device can be considered interchangeable synonyms.

In detail, the transducer 11 is configured to detect a first quantity indicative of an acceleration, in particular linear, or of a vibration of a casing of the first and/or of the second electric motor 3, 4 or of a moving component of the axle 10, i.e. of the axle 10 as a whole with respect to the body 7 of the motor vehicle 1. For example, the transducer 11 comprises an accelerometer, for example an inertial measuring unit, in particular fixed to the casing of the first and/or of the second electric motor 3, 4, or to the moving component of the axle 10, or to any component of the axle 10.

The transducer 12 is configured to detect a second quantity indicative of a magnetic field generated by the first and/or the second electric motor 3, 4 or by the moving component of the axle 10, for example a current induced by the magnetic field. For example, the transducer 12 comprises a conductor, in particular a coil, immersed in the magnetic field generated by the first and/or second electric motor 3, 4 or by the moving component of the axle 10. Thus, the magnetic field generated, being variable, induces a current on the conductor. Therefore, the transducer 12 comprises, for example, a sensor to detect induced current.

The transducer 13 is configured to detect a third quantity indicative of a sound pressure wave generated by the first and/or the second electric motor 3, 4 or by the moving component of the axle 10 or by the axle 10 in general. In fact, the operation of the first and of the second electric motor 3, 4 or of the moving component of the axle 10 implies in any case an audible, though faint, sound. For example, the transducer 13 may be a microphone arranged near the first and/or the second electric motor 3, 4 or any moving component of the axle 10 or any component of the axle 10.

The transducers 14 are configured to detect fourth quantities indicative of the respective power supply currents provided to the first and second electric motors 3, 4.

Preferably, the motor vehicle 1 comprises an electricity network to power the first and the second electric motor 3, 4; the network in turn comprises: two DC-AC converters or inverters 40; two conductors for each of the inverters 40 for the passage of direct current connecting the corresponding one of the inverters 40 to a source of electrical power, for example a battery (not shown in the attached Figures); and two three-phase connections for each of the inverters 40, i.e. with three phases, for the passage of alternating current, one for the connection between one of the inverters 40 and the first electric motor 3 and one for the connection between the other of the inverters 40 and the second electric motor 4.

In particular, the transducers 14 precisely measure the respective power supply currents. For example, the transducers 14 are ammeters. The transducers 14 can detect the respective power supply currents on one or more of these respective phases. In addition, the motor vehicle 1 may comprise, as an alternative or in addition to the transducers 14, a transducer configured to detect the power supply current on the conductors for the passage of direct current.

The transducers 15 are configured to detect respective fifth quantities indicative of respective voltages at the heads of the first and second electric motor 3, 4, i.e., the voltages on one or more of the respective phases for the passage of alternating current. As an alternative or in addition to the transducers 15, the motor vehicle 1 could comprise respective transducers configured to detect relative quantities indicative of the respective power supply voltages of the first and second electric motors 3, 4, i.e., the voltages on the conductors for the passage of the direct current. In particular, the transducers 15 precisely measure the voltage. For example, the transducers 15 are voltmeters. In an alternative embodiment, the transducers 15 can be sensors configured to measure currents, in particular ammeters. In addition, the transducers 15 may comprise sensors configured to measure voltages and sensors configured to measure currents.

The motor vehicle 1 further comprises a sound emission assembly or device 17, in particular a sound emission assembly 17 configured to emit sounds within the passenger compartment 8, in particular as a function of the above-mentioned quantities. The assembly 17 may comprise one or more loudspeakers 18, for example those integrated in the body 7 and/or forming part of loudspeakers external to the body 7, i.e. loudspeakers coupled to or attached to the body 7 inside the passenger compartment 8. The loudspeakers 18 emit the sound directly into the passenger compartment 8. For example, the loudspeakers 18 emit sound with frequencies between 20 Hz and 20 kHz, i.e. sound with frequencies within the spectrum of human hearing.

For example, the loudspeakers 18 may not be part of the emission assembly or device 17 and may be connected or coupled to that emission assembly or device 17. Here, the emission assembly or device 17 could be a device configured to provide a signal to the loudspeakers 18, the signal being reproducible by the loudspeakers 18. For example, the emission assembly or device 17 could even be an electrical connection, an acoustic amplifier, or more generally a current-handling device such as a distortion device.

The loudspeakers 18 of the external speakers can, for example, emit sound with a higher intensity than the loudspeakers 18 of the body 7. For example, the loudspeakers 18 of the external speakers can emit sound with an intensity between 90 and 140 dB, in particular measured at a distance of about one metre from the external speakers, while the loudspeakers 18 of the body 7 can emit sound with an intensity between 40 and 120 dB, in particular measured in the passenger compartment 8.

The acoustic emission may take place either only inside the motor vehicle 1 or also outside thereof, according to a further embodiment, with a combination of internal and external loudspeakers, the latter intended to warn pedestrians of the presence or approach of the motor vehicle 1.

Referring again to Figure 2, each of the transducers 11, 12, 13, 14, 15 is configured to generate a signal associated to or relative to the detected quantity and is coupled to a processing unit or signal processing unit 20 of the motor vehicle 1, such that the latter receives the signals generated by the transducers 11, 12, 13, 14, 15.

The signal processing unit 20 and the transducers 11, 12, 13, 14, 15 may form or be part of the transduction assembly, which may be configured to generate or determine or acquire a characteristic signal associated with the quantities detected by the transducers 11, 12, 13, 14, 15, i.e. related to the detection of the same quantities. More precisely, the latter signal is a condensed signal and is a function of the signals generated by the transducers 11, 12, 13, 14, 15. Alternatively, each of the generated signals can be treated separately by the signal processing unit 20. More generally, the transduction assembly may comprise one or any combination of the transducers 11, 12, 13, 14, 15, with the possible addition of the signal processing unit 20.

The signal processing unit 20 can be part of a control unit of the motor vehicle 1, or be a dedicated unit. The signal processing unit 20 is connected to the transducers 11, 12, 13, 14, 15.

The sound emission assembly 17 can emit sound as a function of the characteristic signal generated or determined by the transduction assembly.

Preferably, the transduction assembly or specifically the signal processing unit 20 is configured to generate or determine the characteristic signal in a condensed manner by applying a sensor fusion algorithm or technique to at least two or more of the quantities detected by the transducers 11, 12, 13, 14, 15. In particular, but not necessarily, the sensor fusion algorithm is applied to all quantities.

For example, the condensed characteristic signal may be representative of a dynamic state of the motor vehicle 1. In other words, the condensed characteristic signal could be a quantity or a state vector, or more generally a state, with the meaning that the terms state quantity, state vector and state have in common control theory.

For example, the condensed characteristic signal or state could be a deterministic function, e.g. linear or non-linear, of the detected quantities or of the relative signals, so that the sensor fusion algorithm would comprise the application of a deterministic observer, such as the Luenberger observer, in the linear case.

Otherwise, the sensor fusion algorithm could comprise the application of a stochastic observer, such as the Kalman filter, possibly in its non-linear variants, if a link between the detected quantities or the relative signals and the condensed characteristic signal or state is modelled as a non-linear function. Here, the condensed characteristic signal or state would be a function, specifically stochastic, of the detected quantities or of the relative signals.

According to another example, the condensed characteristic signal or state could even be the result of a linear or non-linear combination of the signals relative to the detected quantities.

The condensed characteristic signal or the state need not have a precise physical meaning, since it is obtained as a function of the measured quantities, so that it is in any case characteristic of the operation of the first and second motor 3, 4, or of the moving component of the axle 10, and more generally of the motor vehicle 1 even if it cannot be directly associated with operating quantities of the motor vehicle 1 that are easy to interpret physically.

Conveniently, the characteristic signal generated or determined by the transduction assembly, which could be simply a collection or grouping of the signals independently generated by the transducers 11, 12, 13, 14, 15, or more precisely the condensed signal, can be appropriately conditioned, before being provided to the sound emission assembly 17 for emitting sound.

After conditioning, the sound emission assembly 17 can emit the sound as a function of the conditioned signal.

For example, the signal processing unit 20 or another signal processing unit not shown can be configured to perform the conditioning. In particular, conditioning comprises filtering the characteristic signal generated or determined by the transduction assembly through a frequency-based filter, such as a pass-band-filter. The signal processing unit 20 is configured to filter the characteristic signal generated or determined by the transduction assembly through the filter, for example stored by the signal processing unit 20 or determined according to a rotation frequency of the first or of the second electric motor 3, 4 or of the wheels 2, in particular according to a criterion stored by the signal processing unit 20. For example, the signal processing unit 20 determines the filter by determining its order and/or its coefficients.

More specifically, the characteristic signal generated or determined by the transduction assembly, being a function of the signals generated by the transducers 11, 12, 13, 14, 15, for example a condensed characteristic signal, has a frequency content determined by a frequency content of the signals generated by the transducers 11, 12, 13, 14, 15. In particular, the frequency content of the characteristic signal generated or determined by the transduction assembly is determined by a function of a frequency content of one or more of the detected quantities.

Henceforth, the frequency content of the characteristic signal, whether condensed or not, will be followed by the attribute "original" in order to distinguish it in the rest of the text; however, this attribute is illustrative, so it may not have a limiting meaning. Therefore, the attribute "original" is to be understood as an attribute that is not necessary and may therefore be omitted and/or removed.

For example, the original frequency content of the characteristic signal comprises a superposition, or a linear combination, of the individual frequency contents of the signals generated by the transducers 11, 12, 13, 14, 15. Or, the original frequency content of the characteristic signal corresponds to the frequency content of the condensed signal.

According to a further example, the frequencies of the original frequency content of the characteristic signal comprise a fundamental frequency, determined, for example, by a motor revolution number (or rotation frequency) of one between the first and the second electric motors 3, 4, and one or more integer multiples, or harmonics, of this fundamental frequency; the total number of harmonics actually audible depends, for example, on the specific value of the fundamental frequency.

Furthermore, if the characteristic signal is conveniently conditioned, its frequency content becomes correspondingly conditioned, for example according to the frequency-based filters mentioned above. In particular, advantageously, the characteristic signal or its original frequency content may be submitted to a transposition operation, wherein, after possible filtering, this signal is processed in real time so that at least a portion or contribution of the original frequency content corresponding to or belonging to one or more predetermined frequency bands is transposed by means of a "pitch shifting" technique or frequency transposition towards one or more different bands, higher or lower on the frequency scale, with the aim of enhancing the desired acoustic content, according to the taste of a certain category of users, while maintaining the characteristics of the response of the operating axle 10.

In particular, in this way, acoustically unpleasant or even annoying characteristics (for example associated with high-frequency whistling of transmission groups 5, 6, of electric motors 3, 4 or of moving components, especially with frequencies above 500 Hz or especially those above 1kHz), or in any case unwanted, of the characteristic signal are transposed to a frequency band typically associated to acceptable or pleasant acoustic sensations.

Specifically, contributions or portions belonging to an interval between 500 Hz and 10 kHz are transposed or shifted over an interval between 20 Hz and 2 kHz. More specifically, contributions or portions belonging to an interval between 500 Hz and 2 kHz are transposed to an interval between 20 Hz and 500 Hz, while contributions belonging to an interval between 2 kHz and 10 kHz are transposed to an interval between 20 Hz and 2 kHz or more specifically between 500 Hz and 2 kHz. Preferably, the upper limits of the above-mentioned intervals exclude the relative specific value, i.e. the intervals are open at the top.

The original frequency content of the characteristic signal is transformed independently of the construction and functional characteristics of the axle 10.

In practice, the signal processing unit 20 can be configured to perform the pitch-shifting technique on the characteristic signal or the original (possibly filtered) frequency content, thus obtaining the conditioned signal. In detail, the actual performance of the pitch-shifting technique can take place according to any one of several known methods, including for example the phase vocoder method, OLA (Overlap-Add), PSOLA (Pitch-Synchronous Overlap-Add), WSOLA (Waveform-similarity based OLA), "Ocean" (publication "Low Latency Audio Pitch Shifting In The Frequency Domain" by Juilleart & Hirsbunner, published on 1 November 2010 during the "International Conference on Audio, Language and Image Processing"), etcetera.

As anticipated, loudspeakers 18 can receive the conditioned signal from the signal processing unit 20, to which they are connected, and are configured to emit the sound in a way corresponding to the received conditioned signal. The expression "in a way corresponding" implies in particular that sound is an unambiguous function of the conditioned signal, but this does not mean that loudspeakers 18 (being for example a part of the sound system) do not apply further conditioning to the conditioned signal, for example as a function of the conditioned signal itself.

The operation of the loudspeakers 18, which convert a received signal into sound, is well known in itself and is therefore not described in detail. Specifically, the loudspeakers 18 emit the sound inside the passenger compartment 8 of the motor vehicle 1, i.e. they are arranged inside the passenger compartment 8. Alternatively, the loudspeakers 18 can be directed towards the outside of the motor vehicle 1, such that the sound is emitted outside the motor vehicle 1. For example, the loudspeakers 18 may be coupled to the body 7. Alternatively, the loudspeakers 18 may be arranged at the first and/or second electric motor 3, 4 for example the loudspeakers 18 may be attached to an outer casing of the first and/or of the second electric motor 3, 4.

Since the characteristic signal may optionally be filtered and/or conditioned, as described above, the characteristic signal may be transformed into the conditioned signal (filtering is still a form of conditioning) and thus generally differ from the characteristic signal or have a conditioned frequency content that differs from the original frequency content. In addition, as described above, the conditioned signal and the characteristic signal (conditioning being optional) are reproducible by the loudspeakers 18 or more generally by the sound emission assembly 17.

Therefore, hereinafter, we will refer to the conditioned signal with the more generic expression "first sound signal", which also includes the characteristic signal in the event that conditioning and/or filtering do not take place.

Thus, in general, the first sound signal is generated or determined by the signal processing unit 20 as a function of the characteristic signal. Therefore, the first sound signal could also coincide with the characteristic signal or preferably with the filtered and/or conditioned signal.

The frequency content of the first sound signal will hereinafter be denoted as "first frequency content". According to the above explanation, the first frequency content is determined by or as a function of the original frequency content.

For the sake of clarity, the expression "frequency content" can be understood as a synonym for spectrum or frequency response, or possibly more specifically as the set of frequencies for which the amplitude of the relevant signal represented in the frequency domain is greater than a negligibility threshold. For example, this negligibility threshold is: equal to 1 dB; preferably equal to 15 dB; even more preferably equal to 18 dB.

The first sound signal can be reproduced by the loudspeakers 18 or more generally by the sound emission assembly 17 and is also associated to the quantities detected by the transducers 11, 12, 13, 14, 15.

The signal processing unit 20 is configured to receive signals indicative of motor revolution numbers, or rotation frequencies, of the electric motors 3, 4. In particular, the signal processing unit 20 is configured to receive a first motor revolution number R1, associated to the first electric motor 3 or of the first electric motor 3, and a second motor revolution number R2, associated to the second electric motor 4 or of the second electric motor 4.

For example, the first and the second motor R1, R2 can be indicated by relative indicative quantities detected by transducers 16 coupled to the signal processing unit 20 and for example forming part of the transduction assembly. Alternatively, the first and the second motor revolution number R1, R2 may be quantities not necessarily measured by dedicated transducers but may be data already available in the motor vehicle 1 during its operation and transmitted to the signal processing unit 20 through the CAN network. In fact, the first and the second motor revolution number R1, R2 could be quantities controlled by the motor vehicle control unit 1.

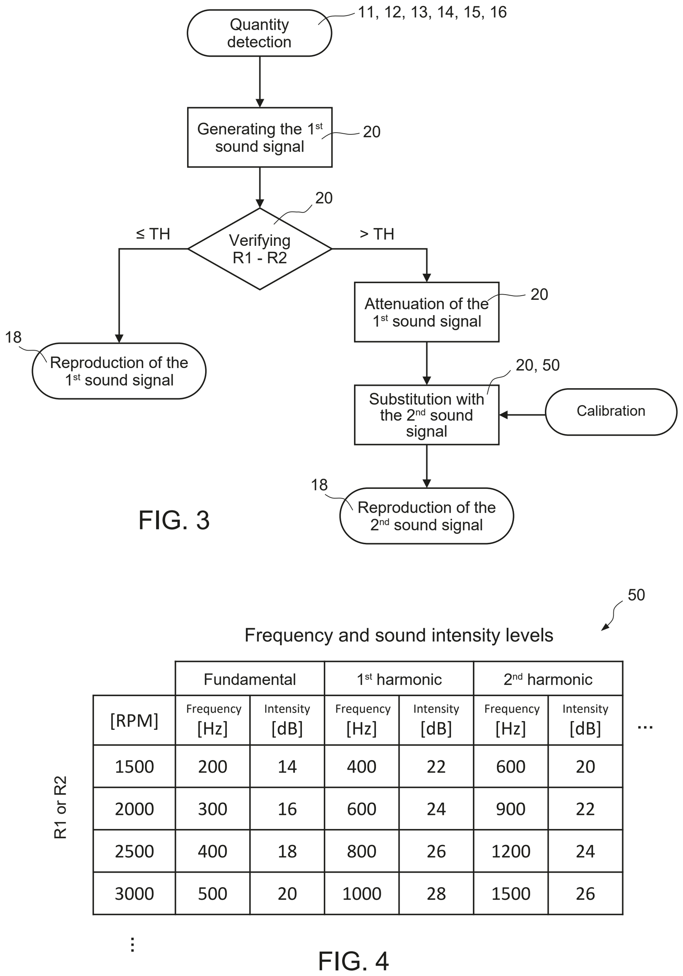

With reference also to Figure 3, the signal processing unit 20 is also configured to verify an operating condition of the first and of the second electric motor 3, 4 on the basis of the first and on the second motor revolution number R1, R2. In detail, the signal processing unit 20 verifies an operating condition of the first and of the second electric motor 3, 4 determined by a difference between the first motor revolution number R1 and the second motor revolution number R2. More specifically, the signal processing unit 20 verifies an operating condition of the first and of the second electric motor 3, 4 determined by a difference between the first motor revolution number R1 and the second motor revolution number R2 less than or equal, in modulus, to a threshold TH.

Preferably, the measurement unit of the threshold TH and of the first and second motor revolution number R1, R2 is the revolution per minute ([rpm]). Furthermore, the threshold TH can be calibrated according to the design preferences.

For example, the threshold TH may be equal to 50 rpm. Preferably the threshold TH is equal to 0 rpm. In this case, the signal processing unit 20 verifies in particular an equality between the first motor revolution number R1 and the second motor revolution number R2.

Still as an example, the threshold TH could be lower than 100 rpm or 50 rpm, or between 0 and 50 rpm or 100 rpm, or still between 50 rpm and 100 rpm.

Furthermore, without further specification, reference will always be made in the following to the difference between the first motor revolution number R1 and the second motor revolution number R2 as a difference taken in modulus.

If the difference between the first motor revolution number R1 and the second motor revolution number R2 is greater, in modulus, than the threshold TH, the operating condition is not verified, i.e. the step of verifying the operating condition is negative; conversely, the step of verifying the operating condition has a positive result when the difference between the first motor revolution number R1 and the second motor revolution number R2 is less than or equal, in modulus, to the threshold TH.

In the motor vehicle 1, a steering condition results in practice and thus corresponds to a difference between the first and the second motor revolution number R1, R2, in particular a difference between the first and the second motor revolution number R1, R2 greater than the threshold TH. In practice, in fact, upon a steering command given by the driver and/or by an assisted driving system, i.e. upon a steering wheel angle greater than zero, the control unit of the motor vehicle 1 sets a difference between the first and the second motor revolution number R1, R2 to generate the effect, known in itself, of an automotive differential.

According to a non-limiting embodiment, therefore, the operating condition is not verified (negative result) in the steering condition.

For example, in a non-limiting manner, the steering command can be impressed by a rotation of the steering wheel W about the steering wheel axis, the rotation corresponding to the steering wheel angle.

For example, in a non-limiting way, the steering wheel angle is not necessarily or exclusively (although it could be) defined by the steering wheel angle performed by the steering wheel W, but the steering wheel angle could more generally be a value corresponding to the steering command and equivalent to the one that can actually be performed by the steering wheel W. In other words, the steering wheel angle could correspond to or be defined by the steering or by the steering angle of the motor vehicle 1 or of the wheels 2, for example the wheels 2a, 2b.

For example, in a non-limiting way, the steering wheel angle can be in general of the motor vehicle 1 or more specifically of the steering wheel W or of the wheels 2, for example the wheels 2a, 2b.

According to a non-limiting embodiment, said operating condition of the first and of the second electric motor 3, 4 is verified when the steering wheel angle is less than or equal in modulus to a respective threshold, in particular by virtue of the correspondence existing, in practice, between steering wheel angle and the difference between motor revolutions. In other words, a steering wheel angle greater than the respective threshold corresponds to a difference between the first and the second motor revolution number R1, R2 greater than the threshold TH. For example, this respective threshold of the steering wheel angle is equal to zero and/or comprised between zero and 20°, more preferably between zero and 10°, even more preferably between zero and 5°. For example, a value of the steering wheel angle corresponds to a difference in motor revolution number uniquely according to a correspondence function that is known in itself and not further detailed here.

According to a non-limiting embodiment, the signal processing unit 20 is configured to measure the steering wheel angle of the motor vehicle 1. The signal processing unit 20 is then configured to verify the operating condition of the first and of the second electric motors 3, 4 on the basis of the measurement of the steering wheel angle. For example, the measuring of the steering wheel angle is performed by means of a suitable sensor (for example of a known and not illustrated type).

According to a non-limiting embodiment, the operating condition is verified when the steering wheel angle is less than or equal to a threshold (of the steering wheel angle). As an alternative or in addition, the operating condition is not verified (e.g. steering condition) when the steering wheel angle is greater than the threshold (of the steering wheel angle).

According to a non-limiting embodiment, said operating condition of the first and of the second electric motor 3, 4 is verified by measuring a steering wheel angle of the motor vehicle, for example without directly calculating the difference between the first and the second motor revolution number R1, R2: for example, in this case, in fact, the steering wheel angle is already indicative of a difference between the first and the second motor revolution number R1, R2.

More generally, according to a non-limiting embodiment, verifying said operating condition comprises employing methods other than a direct determination of the difference between the first and the second motor revolution number R1, R2, such as measuring the steering wheel angle of the motor vehicle 1.

Of course, according to a non-limiting embodiment, verifying said operating condition could comprise determining or calculating the difference between the first and the second motor revolution number R1, R2, as well as comparing the difference with the threshold TH.

In a different practical example, even a differentiated slippage condition of the wheels 2 aligned along the axis A can lead and thus correspond to a difference between the first and the second motor revolution number R1, R2 greater than the threshold TH.

Correspondingly, in the motor vehicle 1, an equality between the first and the second motor revolution number R1, R2, or in any case a difference between the first and the second motor revolution number R1, R2 less than or equal to the threshold TH, is indicative of a condition of rectilinear motion.

On the basis of the verification of the above-mentioned operating condition of the first and of the second electric motor 3, 4, the signal processing unit 20 is then alternatively configured to: send to the sound emission assembly 17 the first sound signal for its reproduction, if the difference between the first and the second motor revolution numbers R1, R2 is less than or equal to the threshold TH (positive result of the verification); or otherwise (negative result of the verification), substitute the first sound signal with a second sound signal (in particular digitally generated), reproducible from the loudspeakers 18 of the motor vehicle 1 or more generally from the sound emission assembly 17, and send said second sound signal to the sound emission assembly 17 for its reproduction, if the difference between the first and the second motor revolution number R1, R2 is greater than the threshold TH.

Sending the first or second sound signal to the sound emission assembly 17, i.e. to the loudspeakers 18 in particular, means in fact emitting sounds through the sound emission assembly 17 or the loudspeakers 18 by reproducing the first or the second sound signal, respectively.

In detail, if the difference between the first and the second motor revolution number R1, R2 is less than or equal to the threshold TH, i.e. if said operating condition is verified, the first sound signal, i.e. the characteristic signal generated or determined by the transduction assembly and possibly filtered and/or conditioned, is reproduced by the loudspeakers 18 as previously described. In such an operating condition, in fact, the first sound signal, and the corresponding sound emitted, are ideally free of beatings.

If, on the other hand, the difference between the first and the second motor revolution number R1, R2 is greater than the threshold TH, i.e. if the aforementioned operating condition is not met, the first sound signal is substituted by the second sound signal, in particular digitally generated as described in more detail below; the second sound signal is then reproduced by the loudspeakers 18 as described above, in place of the first sound signal.

More in detail, and again with reference also to Figure 3, the second sound signal is generated by employing a mapping 50 which associates to one between the first and the second motor revolution number R1, R2 a further sound signal indicative of an operation of the first and/or of the second electric motor 3, 4 corresponding to said operating condition, i.e. indicative of an operation of the first and of the second electric motor 3, 4 as if said operating condition were occurring (although this is not so in reality), in particular, with one between the first and the second motor revolution numbers R1, R2 equal to the actual current value, i.e. an operation in the hypothetical or ideal condition in which the said one between the first and the second motor revolution numbers R1, R2 remains so, and the difference between the first motor revolution number R1 and the second motor revolution number R2 is (hypothetically) less than or equal to the threshold TH, i.e. - more particularly - when the motor vehicle 1 is in a condition of rectilinear motion, although in reality the said difference is greater than the threshold TH.

In general, in order for the operation of the first and of the second electric motors 3, 4 to correspond to the said condition, the signal processing unit 20 can evaluate for the first and the second motor revolution number R1, R2 values different from their respective actual current values, in particular included in an interval between their respective actual current values, so that their difference is less than or equal to the threshold TH, thereby obtaining modified values of the first and of the second motor revolution number R1, R2, so that the signal processing unit 20 can associate the further sound signal to the modified values instead of the current actual values.

Returning now to the meaning of further sound signal, for the sake of clarity, the aforementioned further sound signal coincides specifically with the second sound signal, even though in general this is not necessary, for example since the second sound signal could also be the result of operations of filtering and/or conditioning of the further sound signal, and/or of an addition of a predetermined noise to the further sound signal, optionally filtered and/or conditioned, in order to increase the realism of the second sound signal.

More simply, the sound signal generated by the mapping 50 is an (artificial, i.e. digitally generated) sound signal indicative of or corresponding to a hypothetical operation of the first and of the second electric motors 3, 4 in said operating condition, (in particular with one between the first and the second motor revolution number R1 R2 equal to the actual current value) and/or more precisely to an operation of only one between the first and the second electric motors 3, 4, in particular despite the fact that the first and the second motor revolution number R1, R2 are different from each other and moreover having a difference greater than the threshold TH.

In practice, for example, the signal processing unit 20 generates the second sound signal on the basis of only one between the first and the second motor revolution number R1, R2 (i.e. its actual current value), in particular by assuming or considering that the other is such that their difference is less than or equal to the threshold TH, i.e. (in other words) by assuming or considering that the said operating condition is verified (although actually it is not).

Still in other words, the signal processing unit 20 generates the second sound signal disregarding the operation of one of the electric motors 3, 4, or in such a way that the same second sound signal is indicative only of the operation of one of the electric motors 3, 4.

As an alternative, having evaluated one between the first and the second motor revolution number R1, R2 equal to the current actual value and the other closer to the previous one such that the difference is less than or equal to the threshold TH, the signal processing unit 20 generates the second sound signal on the basis of a function of both the first and the second motor revolution number R1, R2, with one of the two artificially modified so that their difference is less than or equal to the threshold TH. According to a further alternative, the signal processing unit 20 generates the second sound signal on the basis of the number of motor revolution number assumed to be equal to each other and equal to one of their functions, for example an average.

For example, the mapping 50 may be a dedicated mathematical model stored by the signal processing unit 20, or an appropriate function or application of the signal processing unit 20, or an appropriate mathematical formula stored by the signal processing unit 20. As an alternative, the mapping 50 may be stored by or be part of a dedicated unit of the motor vehicle 1 communicating with the signal processing unit 20.

The second sound signal resulting from the association operated by the mapping 50 has its own frequency content, referred to hereinafter as "second frequency content", determined by or on the basis of one between the first and the second motor revolution number R1, R2, or a third motor revolution number given by a combination - or function - of the first and of the second motor revolution number R1, R2 (for example, an average between the first and the second motor revolution number R1, R2).

In detail, the second frequency content comprises one or more frequencies (or, in other words, a set of frequencies) determined by or on the basis of one between the first and the second motor revolution number R1, R2, or the third motor revolution number.

More in detail, the second frequency content could correspond or coincide with the frequency content that the first sound signal would have, i.e. the first frequency content, at the operating condition of the first and second electric motor 3, 4 determined by a difference between the first and the second motor revolution number R1, R2 less than or equal to the threshold TH, in particular with one between the first and the second motor revolution number R1, R2 equal to the current actual value.

Also, the entire second sound signal could correspond or coincide with the first sound signal, in an operating condition of the first and of the second electric motor 3, 4 determined by a difference between the first and the second motor revolution number R1, R2 less than or equal to the threshold TH, in particular with one between the first and the second motor revolution number R1, R2 equal to the current actual value.

Here, in greater detail, the mapping 50 associates to one between the first and the second motor revolution number R1, R2 the second sound signal corresponding to or coinciding with the first sound signal that would actually be generated if the other between the first and the second motor revolution number R1, R2 were closer to the previously mentioned one between the first and the second motor revolution number R1, R2, such that their difference would be less than or equal to the threshold TH, although this is not actually happening.

The frequencies of the second frequency content comprise, for example, a fundamental frequency, determined by one between the first and the second R1, R2, or the third motor revolution number, and one or more integer multiples, or harmonics, of the fundamental frequency. This fundamental frequency is indifferently determined by one between the first and the second motor revolution number R1, R2 or the third motor revolution number because, as mentioned above, the second sound signal corresponds to the first sound signal which would occur when the motor vehicle 1 is in a rectilinear motion condition, i.e. when the motor revolution number of the first and of the second motor revolution number 3, 4 essentially coincide. The total number of harmonics depends, for example, on the specific value of the fundamental frequency.

In greater detail, in order to generate the further sound signal or the second sound signal, the mapping 50 associates to the frequencies of the second frequency content respective sound intensity levels corresponding to reference sound intensity levels, stored, for example, by the signal processing unit 20. In particular, the reference sound intensity levels are associated on the basis of the one (or its value) between the first and the second motor revolution number R1, R2 or on the basis of the third motor revolution number.

According to a non-limiting embodiment, the reference sound intensity levels are stored by the signal processing unit 20, according to the mapping 50, in association with the frequencies of the second frequency content and with the one (or its value) between the first and the second motor revolution number R1, R2 or on the basis of the third motor revolution number.

As shown in Figure 4, the mapping 50 may comprise, for example, an association table in which each value of the first or of the second motor revolution number R1, R2 (rows) corresponds, as anticipated, to a fundamental frequency and one or more harmonics whose sound intensity levels (as said, "reference" sound intensity levels) are indicated in respective adjacent columns.

The second sound signal thus generated is therefore indicative of the operation of the first and/or of the second electric motor 3, 4 at a motor revolution number, which is specifically indicated in a specific row in the association table. The frequency content of the second sound signal, i.e. the second frequency content, comprises the frequencies indicated by the association table in the corresponding columns in association with the specific row mentioned above; these latter frequencies also have sound intensity levels coinciding with the reference sound intensity levels indicated in the corresponding adjacent columns of the association table.

In practice, when the motor vehicle 1 enters, for example, a steering condition, the second sound signal is generated on the basis of one between the first and the second motor revolution number R1, R2 received from the signal processing unit 20, or on the basis of the third motor revolution number, and employing the association of the mapping 50, for example an association such as the one shown in the association table in Figure 4. The second sound signal is therefore digitally synthesised.

According to a non-limiting embodiment, the mapping 50 is a function configured to receive an input defined by one between the first or the second motor revolution number R1, R2 or the third motor revolution number and to associate in a predetermined manner the value of the input with the second frequency content, i.e. the set of frequencies and respective sound intensity levels of the frequencies; in particular, the set of frequencies comprises the fundamental frequency and the one or more harmonics. In other words, for example, the function associates, in a predetermined manner, the value of the input to the set of frequencies (defined by the fundamental frequency and by the one or more harmonics) and to the respective sound intensity level; therefore, in other words, these latter are respectively associated, in a predetermined manner, to the frequencies of the set by the function.

According to a non-limiting embodiment, the second sound signal is defined by the second frequency content.

According to a non-limiting embodiment, the mapping 50 may comprise, for example, a function according to which a value of the first or of the second motor revolution number R1, R2, correspond, as anticipated, to a fundamental frequency and one or more harmonics and respective "reference" sound intensity levels so that, in other words, the sound intensity levels are respectively and in a predetermined manner associated with the fundamental frequency and harmonics by the function.

The second sound signal thus generated is therefore indicative of the operation of the first and/or of the second electric motor 3, 4 at a motor revolution number. The frequency content of the second sound signal, i.e. the second frequency content, comprises the frequencies associated by the function; in other words, these latter frequencies, according to the association made by the function, are also associated to the sound intensity levels coinciding with the reference sound intensity levels.

In practice, when the motor vehicle 1 enters a steering condition, for example, the second sound signal is generated on the basis of one between the first and the second motor revolution number R1, R2 received from the signal processing unit 20, or on the basis of the third motor revolution number, and employing the association of the mapping 50, for example an association of the above-mentioned function. The second sound signal is therefore digitally synthesised.

According to a non-limiting embodiment, the mapping 50 employs as input only one between the first or the second motor revolution number R1, R2 or the third motor revolution number, in a mutually exclusive manner. Therefore, in other words, the input of the mapping 50 is always defined by the first motor revolution number R1, or by the second motor revolution number R2, or by the third motor revolution number, in a mutually exclusive manner.

The reference sound intensity levels, as well as possibly the fundamental frequencies and the relative harmonics, of the mapping 50 can be obtained from a calibration phase of the mapping 50.

In a non-limiting embodiment, the calibration phase of the mapping 50 is a factory calibration phase of the motor vehicle 1. As an alternative, the calibration phase of the mapping 50 is a bench calibration phase of the first and of the second electric motor 3, 4 or more precisely of the axle 10.

More specifically, the calibration phase of the mapping 50 is performed in an operating condition of the first and of the second electric motor 3, 4 determined by a difference between the first and the second motor revolution number R1, R2 less than or equal to the threshold TH. For example, the calibration phase of the mapping 50 is performed with the motor vehicle 1 under rectilinear motion conditions, for discrete values of the first or of the second motor revolution number R1, R2.

The reference sound intensity levels can be obtained from measurements of sounds (for example emitted through loudspeakers 18 or more generally through the sound emission assembly 17), which are reproductions of respective calibration sound signals generated in turn as a function of the characteristic signal generated or determined by the transduction assembly, as described above, i.e. in a manner corresponding to the first sound signal. Each calibration sound signal corresponds to the values of the first and of the second motor revolution number R1, R2, as their difference is less than or equal to the threshold TH.

For example, in a calibration phase of the mapping 50, it is possible to measure the sound intensity levels of the frequencies (as well as possibly the frequencies themselves) of the calibration sound signals or of the relative reproduced sounds by employing appropriate audio sensors and digital processing tools that exploit, for example, Fourier transform-based algorithms, for example the Fast Fourier Transform (FFT). It is thereby possible to derive and store the frequencies and the respective reference sound intensity levels for discrete values of the first and of the second motor revolution number R1, R2 (for example kept equal to each other), and then complete (i.e. calibrate) the mapping 50, for example in the form of the association table in Figure 4.

According to a further example, the fundamental frequency of the second frequency content for a particular value of the first or of the second motor revolution number R1, R2, or the third motor revolution number, can be determined, i.e. calculated, from a mathematical formula stored by the signal processing unit 20.

Similarly, as an alternative or in addition to calibration, reference sound intensity levels could be determined by the signal processing unit 20 by means of a mathematical formula as a function of the first or of the second motor revolution number R1, R2 or of the third motor revolution number.

In a non-limiting embodiment, such as the one shown in Figure 5, the signal processing unit 20, on the basis of the mapping 50, is configured to generate the second sound signal employing a digital oscillator 51 followed by a normaliser 52. In detail, the digital oscillator 51 is configured to selectively operate at the frequencies of the second frequency content determined by one between the first or the second motor revolution number R1, R2 or by the third motor revolution number, in other words to generate waveforms with the frequencies of the second frequency content. The normalizer 52 is configured to regulate the sound intensity levels of the frequencies generated by the digital oscillator 51, or more precisely, to regulate the sound intensity levels of the waveforms at the frequencies of the second frequency content, as a function of the respective reference sound intensity levels of the mapping 50, i.e. by assigning the reference sound intensity levels to the frequencies of the second frequency content.

The substitution of the first sound signal with the second sound signal, when the difference between the first and the second motor revolution number R1, R2 is greater than or equal to the threshold TH, comprises attenuating the first sound signal. For example, attenuating the first sound signal comprises employing an appropriate filter to reduce the first sound signal or the characteristic signal generated or determined by the transduction assembly. For example, the attenuation of the first sound signal is performed by the signal processing unit 20 and the reduction filter has coefficients less than one. It is thereby possible to send a sound signal to the sound emission assembly 17 to be reproduced that is free of beating phenomena caused by the difference between the first and the second motor revolution number R1, R2 greater than the threshold TH.

Similarly to the first sound signal, the second sound signal can also be appropriately conditioned, for example filtered, before being provided to the sound emission assembly 17 for sound emission. For example, the second sound signal can also be conditioned (for example amplified) by the signal processing unit 20 or by appropriate conditioning units.

From the above, the advantages of the motor vehicle 1 are obvious.

The motor vehicle 1 allows the emission of sounds characteristic of the operation of the first and of the second electric motor 3, 4. Therefore, the driver can clearly perceive the operation of the electric motors and can, for example, regulate their driving style accordingly.

The sounds obtained fall within a very wide frequency interval. This would not be achievable through the mere resonance of mechanical objects near the first and the second electric motor 3, 4 or through the use of fluid-dynamic devices.

Since the user can also be the passenger, in addition to the driver, the passenger can share the driver's driving experience by fully understanding the operation of the motor vehicle 1.

Furthermore, the driver and/or passenger enjoyment is undoubtedly increased along with involvement through the sounds.

In addition, the sound signals generated by means of the method of the present invention are free of acoustic interference or beating phenomena, allowing a more reliable emission of sounds associated to the operation of the motor vehicle 1, potentially for all the operating conditions of the first and of the second electric motor 3, 4.

In particular, under conditions of a difference in the motor revolution number of the first and of the second electric motor 3, 4, such as, for example, in a steering condition of the motor vehicle 1, the fully digital generation of a sound signal to substitute the sound signal characterised by beatings allows for a precise, repeatable and, above all, faithful sound emission of the operating condition of the first and of the second electric motor 3, 4.

It is clear that changes and variations can be made to what herein described and illustrated without departing from the protection scope of the present invention, as defined in the appended claims.

In particular, the number of the components illustrated and described may be different. Likewise, the shape of the components may differ from what is described and illustrated.

This means, for example, that the attenuation of the first sound signal can be performed before, or at the same time, or after the generation of the second sound signal.

## Claims

1. Method for generating sounds indicative of the operation of a motor vehicle (1) with electric propulsion, the method comprising the steps of:
- determining (11, 12, 13, 14, 15, 16) a characteristic signal relative to the detection of one or more quantities indicative of an operation of a first electric motor (3) and of a second electric motor (4), the first and the second electric motor (3, 4) being configured to lead into rotation respective wheels (2a, 2b) of the motor vehicle (1) aligned along an axis (A);
- generating (20) a first sound signal, reproducible by sound emission means (18) of the motor vehicle (1) and associated to the one or more quantities, the first sound signal having a first frequency content determined by a function of a further frequency content of the characteristic signal;
- verifying (20) an operating condition of the first and of the second electric motor (3, 4) determined by a difference between a first motor revolution number (R1), associated to the first electric motor (3), and a second motor revolution number (R2), associated to the second electric motor (4), less than or equal in modulus to a threshold (TH);
- emitting sounds through the sound emission means (18) reproducing the first sound signal, when said operating condition is verified; or otherwise
- substituting (20, 50) the first sound signal with a second sound signal, reproducible by the sound emission means (18) of the motor vehicle (1), and emitting further sounds reproducing the second sound signal through the sound emission means (18),
wherein the second sound signal has a second frequency content determined on the basis of one between the first and the second motor revolution number (R1, R2), or on the basis of a third motor revolution number given by a combination of the first and of the second motor revolution number (R1, R2), and
wherein the second sound signal is generated employing a mapping (50) which associates to the said one between the first and the second motor revolution number (R1, R2) or to the third motor revolution number a further sound signal indicative of an operation of the first and/or of the second electric motor (3, 4) corresponding to said operating condition.

2. Method according to claim 1, wherein the said threshold (TH) is equal to zero.

3. Method according to claim 1 or 2, wherein a difference between the first and the second motor revolution number greater in modulus than the threshold (TH) corresponds to a steering condition of the motor vehicle (1).

4. Method according to any one of the preceding claims, wherein the mapping (50) is a function such that the second sound signal resulting from the association operated by the function has the second frequency content determined on the basis of one between the first and the second motor revolution number (R1, R2) or of the third motor revolution number.

5. Method according to claim 4, wherein said function comprises an association table in which to the said one between the first and second motor revolution number (R1, R2) or the third motor revolution number corresponds the second frequency content.

6. Method according to any one of the preceding claims, wherein the second frequency content comprises one or more frequencies determined on the basis of said one between the first and the second motor revolution number (R1, R2) or the third motor revolution number.

7. Method according to claim 6, wherein said frequencies of the second frequency content comprise a fundamental frequency, determined by the said one between the first and the second motor revolution number (R1, R2) or the third motor revolution number, and one or more integer multiples of the fundamental frequency.

8. Method according to claim 6 or 7, wherein the mapping (50) further associates to said frequencies of the second frequency content respective sound intensity levels corresponding to reference sound intensity levels.

9. Method according to claim 8, when dependent on claim 4 or 5, wherein said function associates to the said one between the first and the second motor revolution number (R1, R2) or to the said third motor revolution number said frequencies of the second frequency content and said respective sound intensity levels.

10. Method according to claim 8 or 9, wherein the reference sound intensity levels are obtained from a calibration phase of the mapping (50), wherein, for example, the calibration phase of the mapping (50) is performed in an operating condition of the first and the second electric motor (3, 4) determined by a difference between the first and the second motor revolution number (R1, R2) less than or equal in modulus to the threshold (TH).

11. Method according to any one of claims 8-10, wherein generating the second sound signal comprises employing a digital oscillator (51), configured to operate at the said frequencies of the second frequency content, and a normalizer (52), configured to regulate the sound intensity levels of the respective said frequencies of the second frequency content as a function of said reference sound intensity levels.

12. Method according to any one of the preceding claims, wherein the second frequency content corresponds to the first frequency content in an operating condition of the first and of the second electric motor (3, 4) determined by a difference between the first and the second motor revolution number (R1, R2) less than or equal in modulus to the threshold (TH).

13. Method according to any one of the preceding claims, wherein substituting the first sound signal with the second sound signal comprises attenuating the first sound signal.

14. Method according to any one of the preceding claims, wherein the said function comprises a conditioning of the characteristic signal, in turn comprising a phase of performing a pitch-shifting on, or transposing one or more frequencies of, at least a portion of the further frequency content of the characteristic signal from a first frequency interval to a second frequency interval distinct from the first frequency interval.

15. Method according to the preceding claim, wherein the first frequency interval and the second frequency interval are respectively included within a third frequency interval between 500 Hz and 10 kHz and a fourth frequency interval between 20 Hz and 2 kHz.

16. Method according to any one of the preceding claims, wherein at least a quantity (11) of said quantities is indicative of an acceleration of an electric axle (10) of the motor vehicle (1) comprising the first and the second electric motor (3, 4).

17. Method according to any one of the preceding claims, wherein at least a quantity of said quantities (11, 13) is indicative of:
- a vibration, with respect to a body (7) defining a passenger compartment (8) of the motor vehicle (1), of a casing of the first and/or of the second electric motor (3, 4); or of
- a sound pressure wave generated by the first and/or the second electric motor (3, 4).

18. Method according to any one of the preceding claims, wherein verifying said operating condition comprises measuring a steering wheel angle or a steering angle or a steering of the motor vehicle (1), and wherein said operating condition is verified when the steering wheel angle or the steering angle or the steering is less than or equal in modulus to a further threshold.

19. Motor vehicle (1) comprising:
- a first electric motor (3) and a second electric motor (4), the first and the second electric motor (3, 4) being configured to lead into rotation respective wheels (2a, 2b) of the motor vehicle (1) aligned along an axis (A);
- transduction means (11, 12, 13, 14, 15, 16), configured to detect one or more quantities indicative of an operation of the first electric motor (3) and of the second electric motor (4);
- sound emission means (18), configured to emit sounds reproducing sound signals; and
- a processing unit (20, 50), configured to perform the method according to any one of the preceding claims.
